# EUROPÄISCHE PATENTSCHRIFT

(11) **EP 1 174 337 B1**
(45) Veröffentlichungstag und Bekanntmachung des Hinweises auf die Patenterteilung: **28.09.2005**
(21) Anmeldenummer: 01112181.1
(22) Anmeldetag: 18.05.2001
(51) Int. Cl.: B64C 1/00, B64D 13/00

(54) **Klimaanlagenaufhängung für ein Grossraum-Verkehrsflugzeug**
Air conditioning device suspension for wide-body aircraft
Suspension d'un dispositif de conditionnement d'air pour avion gros porteur

(30) Priorität: 18.07.2000 DE 10035301
(43) Veröffentlichungstag der Anmeldung: 23.01.2002
(73) Patentinhaber: Airbus Deutschland GmbH, 21129 Hamburg (DE)
(72) Erfinder: Kelnhofer, Jürgen, Dipl.-Ing., 21635 Jork (DE)
(74) Vertreter: Hansmann, Dierk

(56) Entgegenhaltungen:
- GB-A- 1 585 798
- PATENT ABSTRACTS OF JAPAN vol. 1999, no. 13, 30. November 1999 (1999-11-30) & JP 11 211215 A (DANREI KOGYO KK), 6. August 1999 (1999-08-06)

## Beschreibung

Die Erfindung bezieht sich auf eine Klimaanlagenaufhängung für ein Großraum-Verkehrsflugzeug gemäß dem Oberbegriff des Anspruchs 1. Mit ihr ist es möglich, eine arbeitserieichtemde und unfallsichere Aufhänge-Technologie für lastintensive Klimaaggregate [die sogenannten Air Generation Units (AGU)] innerhalb einem extrem hohen und erschwert zugänglichen Einbauraum im Flugzeug-Rumpfbereich umzusetzen, mit der ohne weiteren Aufwand, der sich an die strukturseitige statische Bestimmung des Aufhängekonzepts richtet, die flugtechnischen Sicherheitsvorschriften eingehalten werden.

Es ist bekannt, dass man bei Passagierflugzeugen, deren Rumpfbereich (Kabine) in ein Ober- und ein Unterdeck eingeteilt ist, die zu installierende Klimaanlage hauptsächlich nach zwei (technologisch sich unterscheidenden) Konzepten an der Flugzeugstruktur befestigt. Danach wird bei Flugzeugen mit integrierter, luftgestützter Klimaanlage einerseits eine an der Flugzeugdeckenstruktur befestigte "Klimaanlagenaufhängung mittels Aufhängestangen" und andererseits eine auf dem Kabinen- oder Frachtraum-Fußboden befestigter "stehender Klimaanlageneinbau" technologisch umgesetzt. Bei der Klimaanlagenaufhängung mittels Aufhängestangen werden an den verschiedenen Komponenten der Klimaanlage die notwendigen Krafteinleitungspunkte (statisch) definiert, um die Anforderungen der Sicherheitsziele zu gewährleisten. Die Krafteinleitungspunkte werden ebenso an der Flugzeugstruktur bestimmt. Als Verbindungs- und Kraftübertragungselemente benutzt man sogenannte Aufhängestangen, welche zwar in ihrer Länge bedingt einstellbar sind, die jedoch trotzdem hohe Anforderungen bezüglich der Fertigungstoleranz benötigen. Beim Einbau der (aus mehreren Klimaaggregaten integrierten) Klimaanlage werden diese Stangen an der Flugzeugstruktur vormontiert und während des Einbaus mit den verschiedenen Krafteinleitungspunkten an der Klimaanlage (am einzelnen Klimaaggregat) justiert und eingestellt. Der für diese Flugzeugrumpf-Konstruktionen, bspw. für die bekannten Airbus-Erzeugnisse: "A319, A320, A321, A330, A340", noch vorteilhafte Klimaanlageneinbau, ermöglicht während der Installation ein hohes Maß an Flexibilität, weil durch die Stangenverbindung jede tragende Struktur als möglicher Aufhängepunkt genutzt werden kann. Deshalb wird eine Installation der Klimaanlage im Bereich der "Belly Fairing", also außerhalb des Flugzeugrumpfes, machbar, wobei die Klimaanlage dann (relativ stabil, was die Aerodynamik betrifft, außerhalb des Druckrumpfes) an der Flugzeugstruktur hängt.

Anders bei der Umsetzung einer auf der Flugzeug(boden)struktur stehend befestigten Klimaanlage, wonach dann die Klimaanlage durch entsprechende Verbindungen dem entsprechenden (statisch bestimmten) Fußbodenbereich befestigt wird. Dieses Befestigungskonzept wird bspw. bei der Fertigung der bekannten Airbus-Erzeugnisse: "A300 , A310" umgesetzt. Dieser Einbautechnologie haften insofem gewisse Nachteile an, weil der stehende Einbau der Klimaanlage eine direkte (mechanische) Verbindung mit der Flugzeug(boden)struktur (also: einer festen Bodenunterstruktur) innerhalb des Flugzeugrumpfes erfordert.

Da der gewählte Einbauort der Klimaanlage sich somit nur innerhalb des Flugzeugrumpfes befindet, lässt sich eine Reduktion des Kabinen- bzw. Frachtraumvolumens wohl kaum verhindem. Ein stehender Einbau der Klimaanlage (resp. des einzelnen Klimaaggregats) wäre technisch gesehen ebenfalls (innnerhalb von Bereichen außerhalb des Flugzeugrumpfes, wie bspw. der "Belly Fairing" denkbar, eine solche Maßnahme würde aber zu Ungunsten einer Gewichtszunahme (eines extremen Mehrgewichtes), verursacht durch entsprechende Kraftübertragungselemente und vorzusehende Versteifungen, erkauft werden.

Beide Einbaukonzepte werden sich bei der Befestigung einer Klimaanlage, mit der ein mehrdeckiges Großraumflugzeug, bspw. vom Typ "A3xx", ausgerüstet wird, (technologisch betrachtet) nicht dermaßen umsetzen lassen, zumal die sogenannte "Air Generation Units" (AGU) in einem extrem hohen Einbauraum, der durch die Bereiche seitlich der "Belly Fairing" und dem Flügelwurzelansatz definiert ist, platziert werden soll. Aus Gründen der nicht vollends gänzlichen Reduktion (Einschränkung) des Kabinen- bzw. Frachtraumvolumens durch die Positionierung der Klimaanlage innerhalb diesem Flugzeugrumpfbereich bzw. (anders ausgedrückt) der (angedachten) wenigstens teilweisen Auslastung des freibleibenden (verbleibenden) Raumvolumens ober- oder unterhalb der zu platzierenden Klimaanlage und auch wegen der Anwendung einer von Arbeitserschwemis weitestgehend befreiten Einrüstung der Klimaanlage, deren Einrüstung außerdem keine das Flugzeuggewicht erhöhenden Maßnahmen umfassen darf, wird eine Einrüstungstechnologie vorzusehen sein, mit der die vorbeschriebenen Nachteile der bekannten Einbaukonzepte abgestellt werden.

Demzufolge liegt der Erfindung die Aufgabe zugrunde, eine Klimaanlagenaufhängung für ein Großraum-Verkehrsflugzeug vorzuschlagen, mit der es möglich, eine arbeitserleichtemde und unfallsichere Aufhänge-Technologie für eine lastintensive Klimaanlage [eine sogenannte Air Generation Units] innerhalb einem extrem hohen und erschwert zugänglichen Einbauraum im unteren Flugzeug-Rumpfbereich umzusetzen, mit der auch ohne besonderen Aufwand, der sich an die strukturseitige statische Bestimmung des Aufhängekonzepts richtet, die flugtechnischen Sicherheitsvorschriften eingehalten werden. Außerdem soll eine wenigstens teilweise Auslastung des freibleibenden (verbleibenden) Raumvolumens ober- oder unterhalb der zu platzierenden Klimaanlage, deren Einrüstung außerdem keine das Flugzeuggewicht erhöhenden Maßnahmen umfassen darf, vorgesehen werden.

Diese Aufgabe wird durch die im Anspruch 1 angegebenen Maßnahmen gelöst. In den weiteren Unteransprüchen sind zweckmäßige Ausgestaltungen dieser Maßnahmen angegeben.

Die Erfindung ist in einem Ausführungsbeispiel anhand der beigefügten Zeichnungen näher beschrieben. Dazu zeigt die
- Fig. 1: die Seitenansicht der (an einer horizontalen Flugzeug-Deckenstruktur) befestigten Klimaanlagenaufhängung mit der an ihr befestigten Klimaanlage;
- Fig. 2: die Draufsicht des (der Klimaanlagenaufhängung integrierten) Aufhängerahmens;
- Fig. 3: die Seitenansicht der (an einer abgeschrägten Flugzeug-Deckenstruktur) befestigten Klimaanlagenaufhängung mit der an ihr befestigten Klimaanlage;
- Fig. 4: die Ansicht für eine Klimaanlagenaufhängung nach Fig. 1 mit einem modifizierten Aufhängerahmen;
- Fig. 5: die Ansicht für eine mit der Anordnung nach Fig. 6 modifizierte Klimaanlagenaufhängung nach Fig. 1;
- Fig. 6: die Draufsicht einer Anordnung von miteinander verbundenen Quer- und Längs-Halterungen;
- Fig. 7: die Ansicht für eine mit der Anordnung nach Fig. 8 modifizierte Klimaanlagenaufhängung nach Fig. 1;
- Fig. 8: die Draufsicht einer weiteren Anordnung von miteinander verbundenen Quer- und Längs-Halterungen.

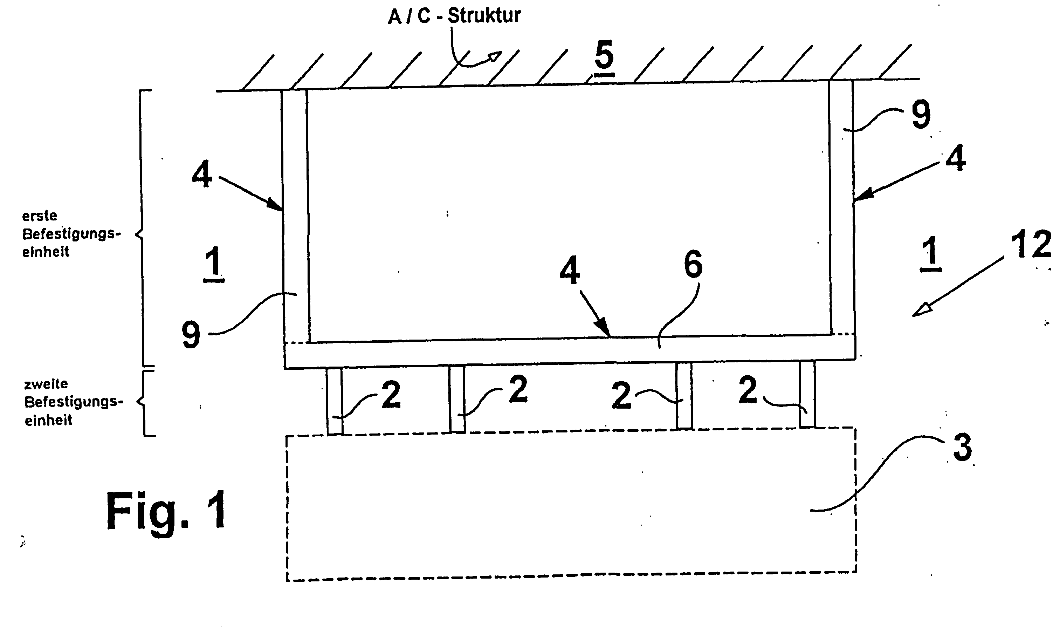

Die in der Fig. 1 gezeigte Klimaanlagenaufhängung 12, die in einer Seitenansicht dargestellt wird, besteht (allgemein betrachtet) beispielgemäß aus zwei (nicht näher bezifferte) Befestigungseinheiten. Dabei umfasst die betreffende Befestigungseinheit entsprechende Befestigungsmittel, die sich konstruktiv unterscheiden, sofem man das (die) betreffende(n) Befestigungsmittel (auf die Befestigungseinheit bezogen) vergleicht.

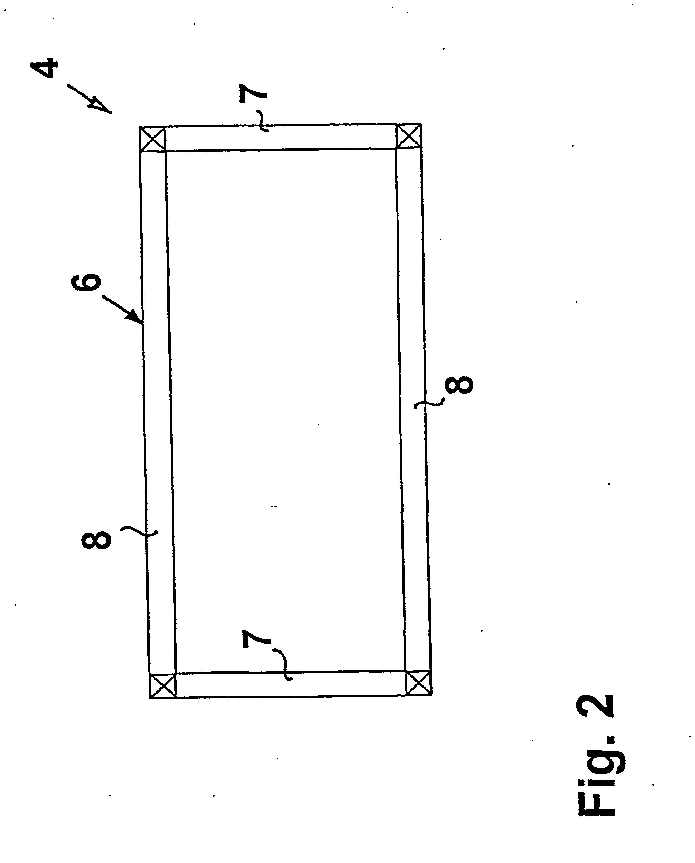

Danach besteht eine erste Befestigungseinheit aus der Anordnung von mehreren (gleich langen) Aufhängestangen 2, von denen vier dieser Stangen figurlich dargestellt sind. Eine zweite Befestigungseinheit wird durch einen zusammengesetzten Aufhängerahmen 4 verkörpert, der aus einem Rahmengrundgestell 6 und mehreren (gleich langen) Rahmendifferenzträgem 9 (oder besser vielleicht: vertikal angeordneten Distanzträgern), von denen zwei dieser Träger figurlich dargestellt sind, aufgebaut ist. Das rechteckförmige Rahmengrundgestell 6, dessen Gestalt man aus der Draufsicht nach der Fig. 2 entnehmen kann, besteht beispielgemäß aus zwei (gleich langen) Längsträgern 8 und zwei (gleich langen) Querträgern 7, die an den Rahmen-Eckpunkten (bspw. durch Schweiß- oder Bolzen- oder Schraubverbindung) mechanisch verbunden sind. Dabei ist jeweils an einem der Eckpunkte ein Längsträger 8 einem Querträger 7 befestigt. Weitere Quer- oder Längsträger 7, 8, die vorsorglich (aus Gründen der Dimensionierung und der statischen Bestimmung des fertigen Aufhängerahmens 4) an den zur Rahmenverstärkung vorgesehen Auflagestellen des Rahmengrundgestells 6 befestigt sind, wären auch denkbar, werden aber (hier) nicht berücksichtigt.

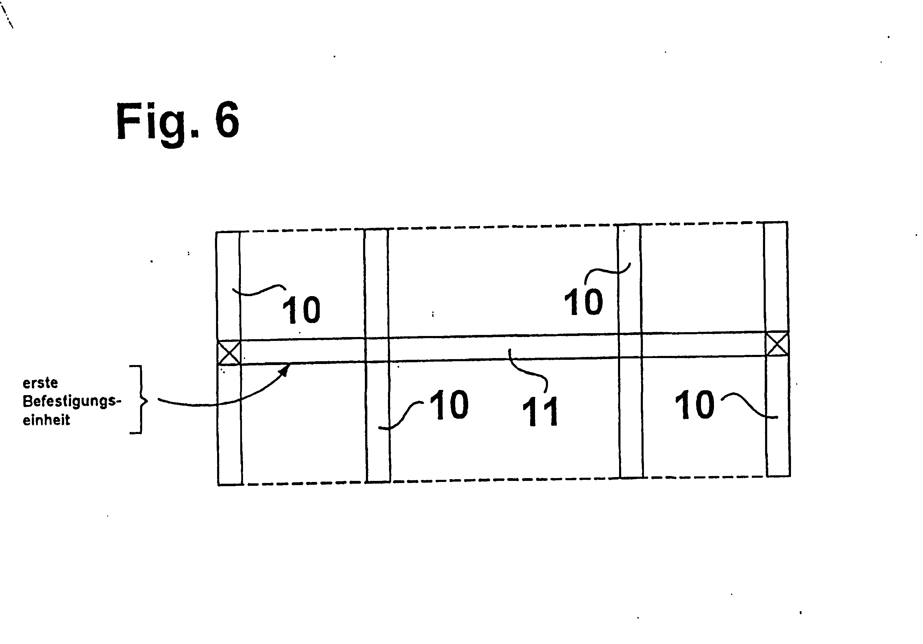

Zurückkommend auf die Fig. 1 werden an den definierten (statisch bestimmten) Krafteinleitungs- und Übertragungspositionen oberhalb des Rahmengrundgestells 6 jeweils lotrecht stehende Rahmendifferenzträger 9 mechanisch befestigt. Gemäß diesem Beispiel sind diese Rahmendifferenzträger 9 auf den vorerwähnten Rahmen-Eckverbindungen (oberhalb) der Quer- und Längsträger 7, 8 positioniert. Außerdem werden die nicht befestigten Trägerenden der Rahmendistanzträger 9 an den definierten Krafteinleitungs- und Übertragungspositionen der Flugzeug-Struktur 5 befestigt, wodurch der Aufhängerahmen 4 dann unterhalb der (metallenen) Innenstruktur des Flugzeugrumpfes definitiv fixiert ist. Da die Klimaanlage i. d. R. im Unterdeck (Fracht- und / oder Laderaumbereich) des Flugzeuges positioniert wird, kann man davon ausgehen, dass (nach dem Beispiel) wenigstens vier nicht befestigte Trägerenden dieser (figurlich dargestellten) Rahmendifferenzträger 9 unterhalb der Kabinendecke (Fracht- und / oder Laderaumdecke) an der metallenen Flugzeug-Innenstruktur (also am Kabinenboden) befestigt sind. Bei einem vergleichsweise als Einfachrahmen ausgeführten Rahmengrundgestell 6 gemäß der Fig. 6 werden (also) wenigstens zwei Rahmendifferenzträger 9 benötigt.

Außerdem ist die (aus der Anordnung von mehreren Befestigungsstangen 2 gebildete) erste Befestigungseinheit dem oberen Auflagebereich der Klimaanlage 3 positioniert. Dabei sind die erwähnten (wegen ihrer Zweckbestimmung dermaßen bezeichneten) Aufhängestangen 2 an den definierten (statisch bestimmten) Krafteinleitungs- und Übertragungspositionen oberhalb der verschiedenen (die Klimaanlage 3 bildenden) Klimaanlagen-Komponenten lotrecht stehend befestigt. Es kann aber (auf alle Ausführungen bezogen) vorgesehen werden, dass die Rahmendifferenzträger 9 sowie die Aufhängestangen 2 aus Gründen der konstruktiv vorhandenen Einbaubedingungen nicht lotrecht stehend [also: mit einem Winkel von größer oder kleiner 90 Grad - an der betreffenden Befestigungsstelle (bspw. des Rahmengrundgestells 6)] positioniert sind. Weiter werden die (nicht an den Klimaanlagen-Komponenten befestigten) verbleibenden Stangenenden an den definierten (statisch bestimmten) Krafteinleitungs- und Übertragungspositionen unterhalb des Aufhängerahmen 4 (genauer: unterhalb des Rahmengrundgestelles 6) befestigt, so dass die an den Aufhängestangen 9 und über die Stangenbefestigung am Aufhängerahmen 4 an der Flugzeugstruktur 5 befestigte Klimaanlage 3 eine für extrem hohe Einbauräume 1 geeignete Lage (von niedrigem Höhenniveau) einnimmt, deren Position auch die zeitweilig anfallenden Wartungs- oder Instandhaltungsarbeiten an den betreffenden Klimaanlagen-Komponenten erleichtern wird. Die technologische Reihenfolge der zu befestigenden Elemente wird an dieser Stelle vemachlässigt, worauf aber später noch näher eingegangen wird. Nicht zuletzt wird noch erwähnt, dass der Aufhängerahmen 4 speziell dimensioniert und statisch bestimmt ist, wobei die Anzahl der Krafteinleitungs- und Übertragungspositionen zwischen dem Aufhängerahmen 4 und der zum Flugzeugrumpf-Innenraum gerichteten Flugzeug-Struktur 5 (Boden- /Deckenstruktur) und die Biegefestigkeit der Rahmendistanzträger 9 des Aufhängerahmen 4 sowie der Aufhängestangen 2 durch die Aufhängelast der Klimaanlage (3) und den Randbedingungen der Flugsicherheit definiert ist.

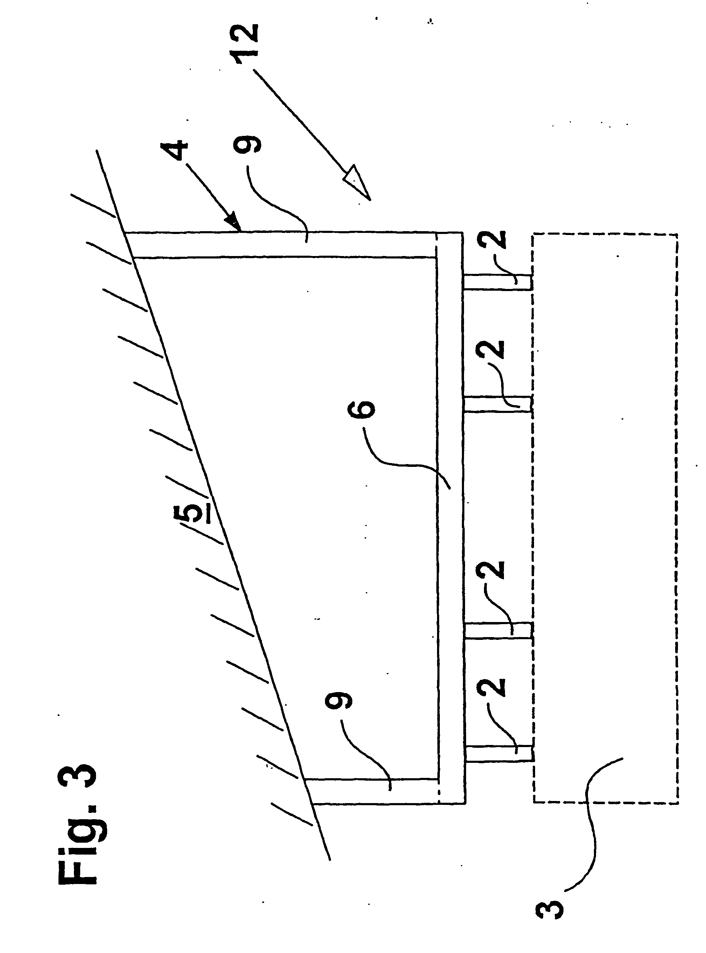

Anknüpfend an diese Ausführungen wird man in der Fig. 3 einen ähnlichen Aufbau der Klimaanlagenaufhängung 12 mit der an ihr befestigten Klimaanlage 3 entdecken, mit dem Unterschied, dass letztere an einer abgeschrägten Flugzeug-Struktur 5 (genauer: Flugzeug-Deckenstruktur) befestigt ist. Dazu kann man aus der Seitenansicht die beiden (bildlich nur dargestellten) Rahmendifferenzträger 9 mit einer (der Deckenabschrägung angepaßten) unterschiedlicher Länge erblicken.

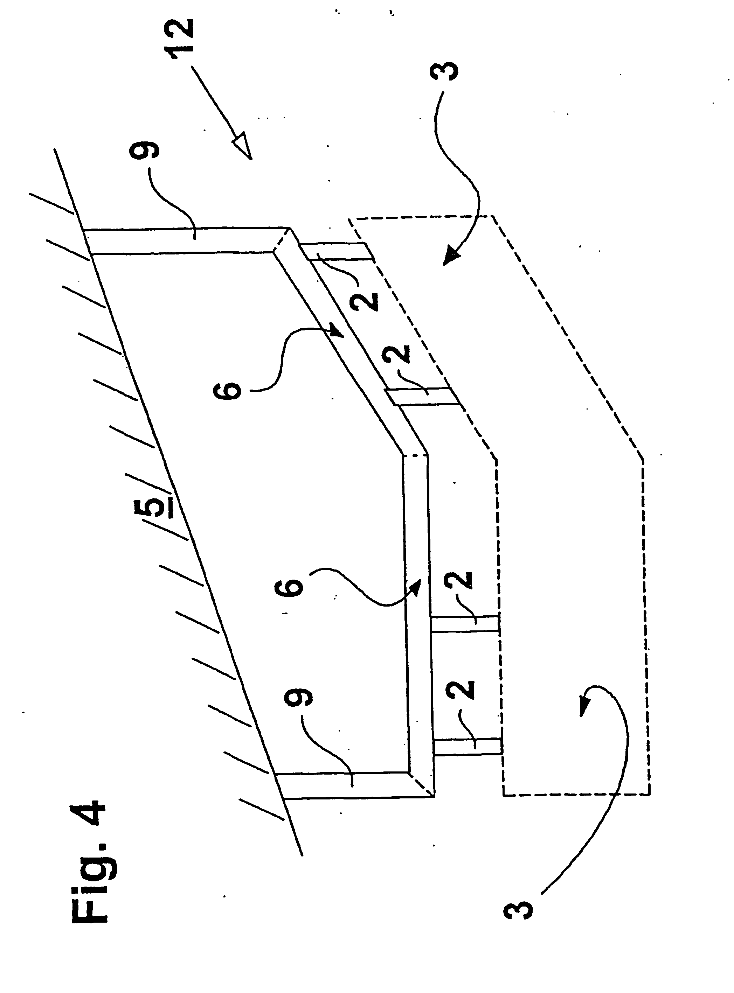

Auch die Seitenansicht der Fig. 4 vermittelt eine ähnlich aussehende Klimaanlagenaufhängung 12, die eine Modifizierung der Anordnung nach der Fig. 1 verkörpert. Die Ausführung dieser Aufhängung besitzt deswegen einen veränderten Aufbau, welcher auf die (im Vergleich der Figuren 1 und 3 bezogene) veränderte Lage der Klimaanlage 3 abgestimmt ist, um - wie angedeutet - bestimmte Geometrien des betreffenden Klimaaggregates ausgleichen zu können. Betroffen davon sind auch die - auf die(se) Lage der Klimaanlage 3 maßlich und miteinander mechanisch verbundenen abgestimmten - Teile der Klimaanlagenaufhängung 12.

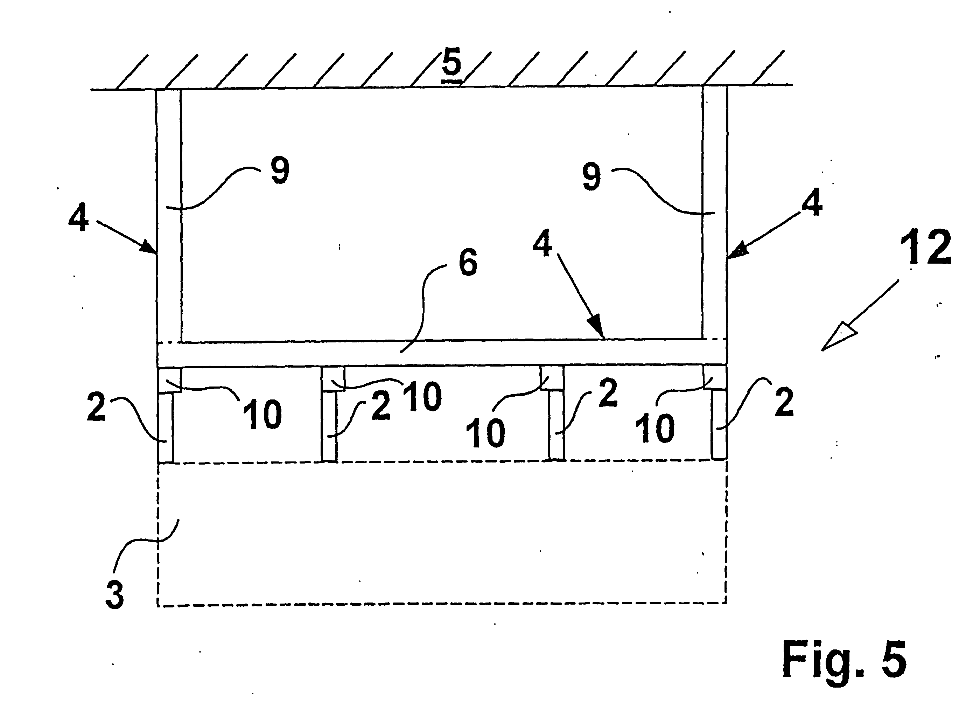

In der Fig. 5 wird ebenfalls eine der Fig. 1 ähnlich gestaltete Klimaanlagenaufhängung 12 gezeigt, der - unterhalb des Rahmengrundgestelles 6 bzw. oberhalb der (vorher als "nicht... befestigt" bezeichneten) Stangenenden der Aufhängestangen 2 aufliegend - eine aus Quer- und Längshalterungen 10, 11 integrierte Zusatzhalterung befestigt ist. Der Aufbau dieser Zusatzhalterung sowie die Anordnung der kreuzweise (mechanisch) verbundenen Quer- und Längshalterungen 10, 11 wird in der Draufsicht nach der Fig. 6 ausführlicher gezeigt. Nach der Fig. 5 ist das Rahmengrundgestell 6 an den nicht befestigten Stangenenden der Aufhängestangen 2 befestigt, wobei letzteren obenaufliegend die Quer- und Längshalterungen 10, 11 dem Rahmengrundgestell 6 befestigt sind. Die Befestigung der Rahmendifferenzträger 9 an den definierten Krafteinleitungs- und Übertragungspositionen am Rahmengrundgestell 6 und an der horizontal angeordneten Flugzeug-Deckenstruktur (Flugzeug-Struktur 5) wird nach dem Vorbild der Fig. 1 geschehen. Wie mitgeteilt - werden diese Quer- und Längshalterungen 10, 11 vorzugsweise an den (nicht an den Klimaanlagen-Komponenten der Klimaanlage 3 befestigten Stangenenden der Aufhängestangen 2 (aus technologischen Erwägungen heraus) befestigt, weil man je nach Zugänglichkeit zu den flugzeugseitigen Krafteinleitungspunkten und je nach Ausführung des Aufhängerahmens 4 möglichenfalls (sinnvollerweise) eine Vormontage der Klimaanlage 3 bzw. der (ihr integrierten) Klimaaggregate (noch vor deren Aufhängung auf dem Boden stehend) vorsehen wird. Dadurch wird auch ein anschließender Einschub des Komplettsystems (Klimaanlage 3 und Aufhängerahmen 4) in den vorgesehenen Einbauraum 1 möglich. Insbesondere würden sich für diese Art der Montage die Ausführungen des Aufhängerahmens 4 nach der Fig. 5 (und mit einem Vorgriff: nach den Figuren 6 bis 8) vorteilhaft erweisen, da die Quer- und Längsträger 10, 11 dieser Zusatzhalterung erst im Einbauraum 1 mit dem eigentlichen Aufhängerahmen 4 verbunden werden können.

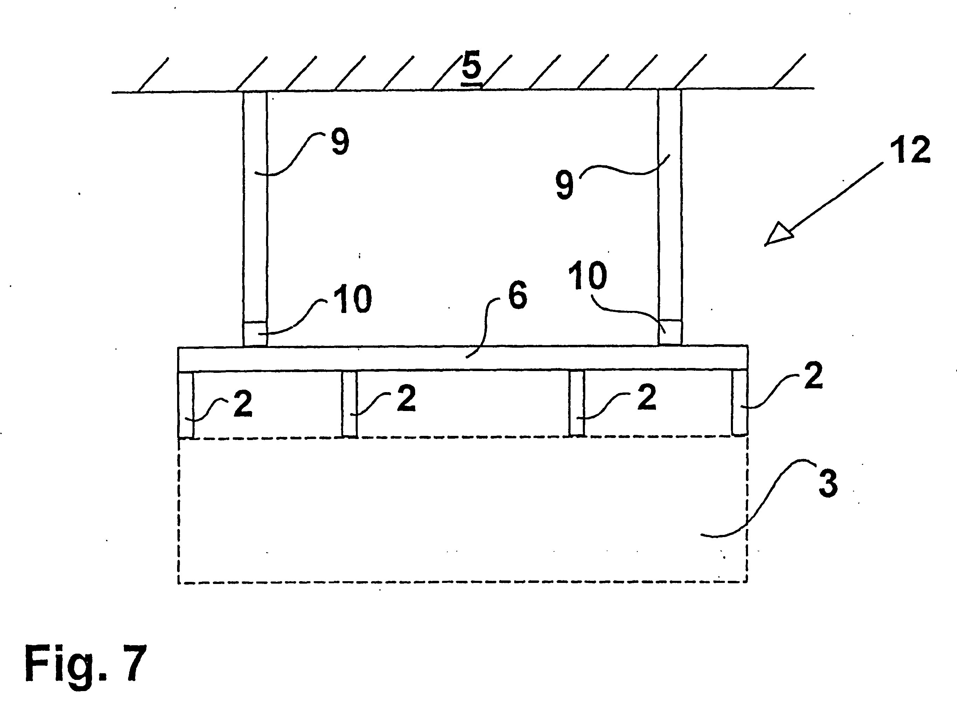

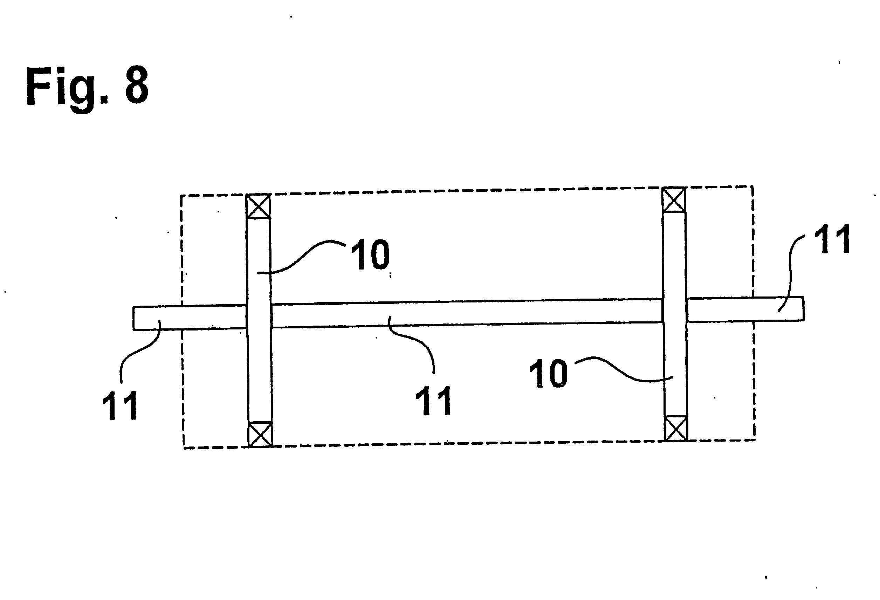

Aus der Ansicht nach der Fig. 7 wird man eine weitere Modifizierung der Klimaanlagenaufhängung 12 entnehmen. Sie unterscheidet sich von den bisherigen Ausführungen derart, wonach die in der Fig. 8 als Draufsicht dargestellte (und im Vergleich der Fig. 6 - modifizierte) Zusatzhalterung, die ebenfalls aus Quer- und Längsträgern 10, 11 (der vorbeschriebenen Art) besteht, auf dem erwähnten Rahmengrundgestell 6 befestigt ist. Dabei ist letzteres direkt an den definierten Krafteinleitungs- und Übertragungspunkten der Aufhängestangen 4 befestigt, wobei deren (nicht an den Klimaanlagen-Komponenten befestigten) freien Stangenenden der Unterseite des Rahmengrundgestelles 6 befestigt aufliegen. Außerdem werden die Rahmendifferenzträger 9 an den definierten Krafteinleitungs- und Übertragungspositionen dieser Zusatzhalterung lotrecht stehend befestigt.

Ansonsten findet man die vorgeschilderte Aufhängung der Klimaanlage 3 an der Flugzeug-Struktur 5 (horizontalen Decken- bzw. unteren Bodenstruktur) - wie gehabt -wieder.

Zusammenfassend wird resümiert, dass das vorgestellte Konzept der Aufhängung von einer Klimaanlage 3 in einem (mit extrem hohem Abstand zwischen der Decken- und der Bodenstruktur ausgestatteten) Einbauraum 1, den man in einem Großraum-Verkehrsflugzeug in der unteren Kabinenetage (Fracht- oder Laderaum) vorfinden wird, einen Aufhängerahmen 4 verwendet, um Vorteile (im Vergleich der eingangs gewürdigten traditionellen Lösungen) zu erreichen. Danach werden sich die zur Aufhängung einer herkömmlich befestigten Klimaanlage 3 verwendeten Aufhängestangen 2 auf eine minimale Länge reduzieren. Als Folge dessen reduziert sich die absolute Längenausdehnung der Stange bei Temperaturänderungen, wodurch sich auch der Fertigungsaufwand der Aufhängestangen 2 reduziert, weil die nötigen Toleranzen groß gehalten werden können. Als Folge dessen wird sich auch die Kritikalität der Eigenfrequenzen der Aufhängestangen 2 reduzieren. Ebenfalls durch diese Maßnahme verringern sich das Einbaugewicht der Aufhängestangen 2 und auch der Arbeitsaufwand beim Einbau der Klimaaggregate entsprechend. Durch die mögliche Vormontage der Klimaanlage 3 (des betreffenden Klimaaggregats) und deren gesonderte Aufhängung an dem (vorgefertigten) Aufhängerahmen (mit oder ohne Installation der betreffenden Zusatzhalterung (Einbauhalterung) wird sich gleichfalls der Montageaufwand (die Einbauzeit) reduzieren. Aufgrund der deutlich geringen Anzahl der Befestigungspositionen (hier mit mindestens 4 Befestigungspunkten) im Vergleich der herkömmlichen Installation(en) zwischen der Flugzeug-Struktur 5 und dem Aufhängerahmen 4 (Einbaurahmen) reduziert sich der strukturseitige Arbeitsaufwand für die Bereitstellung der Krafteinleitungspositionen an der Flugzeug-Struktur 5. Letztlich wäre - aufgrund der Flexibilität des vorgestellten Aufhängekonzepts - ebenfalls eine Anwendung (Übertragung) auf andere Flugzeug-System oder -Aggregate, bspw. des Hilfstriebwerkes (APU) denkbar.

Diese Vorteile lassen sich mit einem speziell dimensionierten und statisch bestimmten Aufhängerahmen 4, der innerhalb einem extrem hohen Einbauraum 1 an der Flugzeug-Struktur 5 befestigt ist und eine Klimaanlage 3 trägt, erreichen.

Dabei bestimmt sich die Anzahl der Kraftübertragungspunkte zwischen dem Aufhängerahmen 4 und der Flugzeug-Struktur 5 sowie die Biegesteifigkeit des betreffenden Bauteils aus der daran zu befestigenden Last und den vorgeschriebenen Randbedingungen der für den Flugzeugbau geltenden Sicherheitsvorschriften. Mit dem Einbau eines solchen Aufhängerahmens 4 werden die Krafteinleitungs- oder Übertragungs-positionen der Flugzeug-Struktur 5 punktuell auf ein niedrigeres Höhenniveau abgesenkt.

### Bezugszeichen

- 1: Einbauraum (Kabinenbereich unterhalb des Fußbodens gelegen)
- 2: Aufhängestange
- 3: Klimaanlage
- 4: Aufhängerahmen
- 5: Flugzeug-Struktur
- 6: Rahmengrundgestell
- 7: Querträger
- 8: Längsträger
- 9: Rahmendifferenzträger
- 10: Querhalterung
- 11: Längshalterung
- 12: Klimaanlagenaufhängung

## Patentansprüche

1. **Flugzeugstruktur mit Klimaanlage und Klimaanlagenaufhängung für** ein Großraum-Verkehrsflugzeug, die man zur horizontalen Aufhängung von einer im Flugzeug-Rumpfinnenbereich installierten Klimaanlage (3), die innerhalb eines hohen Einbauraums (1) an der Flugzeug-Struktur (5) befestigt ist, einsetzt, welche mehrere Befestigungseinheiten, die aus verschiedenartigen Befestigungsmitteln integriert sind, aufweist, wobei eine erste Befestigungseinheit aus einer Anordnung von mehreren Aufhängestangen (2) besteht, die an definierten Krafteinleitungs- und Übertragungspositionen von verschiedenen Klimaanlagen-komponenten, die oberhalb der Klimaanlage (3) positioniert sind, lotrecht oder etwa lotrecht stehend befestigt sind,
**dadurch gekennzeichnet, dass** die nicht an den Klimaanlagenkomponenten befestigten Stangenenden der Aufhängestangen (2) an definierten Krafteinleitungs- und Übertragungspositionen von einem Aufhängerahmen (4), der eine zweite Befestigungseinheit verkörpert, befestigt sind und der Aufhängerahmen (4) an definierten Krafteinleitungs- und Übertragungspositionen unterhalb der innerhalb des Flugzeugrumpfes gelegenen Flugzeug-Struktur (5) befestigt ist.

2. **Flugzeugstruktur** nach Anspruch 1, **dadurch gekennzeichnet, dass** der Aufhängerahmen (4) ein aus miteinander verbundenen Quer- und Längsträgern (7, 8) gebildetes Rahmengrundgestell (6) und mehrere auf letzterem angeordnete Rahmendifferenzträger (9), die an den definierten Krafteinleitungs- und Übertragungspositionen oberhalb des Rahmengrundgestelles (9) lotrecht oder etwa lotrecht befestigt sind, aufweist, dabei die nicht am Rahmengrundgestell (6) befestigten Trägerenden der Rahmendistanzträger (9) an den definierten Krafteinleitungs- und Übertragungspositionen der Flugzeug-Struktur (5) befestigt sind.

3. **Flugzeugstruktur** nach Anspruch 2, **dadurch gekennzeichnet, dass** wenigstens zwei nicht am Rahmengrundgestell (6) befestigte Trägerenden der Rahmendistanzträger (9) unterhalb der Kabinen- oder Frachtraumdecke an der metallenen Flugzeug-Innenstruktur befestigt sind.

4. Flugzeugstruktur nach Anspruch 3, **dadurch gekennzeichnet, dass** bei einem als Einfachrahmen ausgeführten Rahmengrundgestell (6) wenigstens zwei oder bei einem als Dreieck-rahmen ausgeführten Rahmengrundgestell (6) wenigstens drei oder bei einem als quadrat- oder rechteckförmigen Rahmen ausgeführten Rahmengrundgestell (6) wenigstens vier oder bei einem als Vieleckrahmen oder der Kombination aus Rahmenkonstruktionen mit Mehrfachaufhängung ausgeführten Rahmengrundgestell (6) wenigstens vier oder mehr als vier nicht am Rahmengrundgestell (6) befestigte Trägerenden der Rahmendistanzträger (9) unterhalb der Kabinen- oder Frachtraumdecke an der metallenen Flugzeug-Innenstruktur befestigt sind.

5. **Flugzeugstruktur** nach den Ansprüchen 1 und 2, **dadurch gekennzeichnet, dass** unterhalb des Rahmengrundgestelles (6) mehrere mechanisch verbundene Quer- und Längshalterungen (10, 11) befestigt sind, an denen die nicht an den Klimaanlagenkomponenten befestigten Stangenenden der Aufhängestangen (2) befestigt sind.

6. **Flugzeugstruktur** nach den Ansprüchen 1 bis 5, **dadurch gekennzeichnet, dass das** Rahmengrundgestell (6) an den nicht an den Klimaanlagenkomponenten befestigten Stangenenden der Aufhängestangen (2) befestigt ist und außerdem auf den Quer- und Längshalterungen (10, 11), die obenauf liegend dem Rahmengrundgestell (6) befestigt sind, die lotrecht oder etwa lotrecht angeordneten Rahmendifferenzträger (9) an den definierten Krafteinleitungs- und Übertragungspositionen befestigt sind.

7. **Flugzeugstruktur** nach Anspruch 1, **dadurch gekennzeichnet, dass** der Aufhängerahmen (4) speziell dimensioniert und statisch bestimmt ist, wobei die Anzahl der Krafteinleitungs- und Obertragungspositionen zwischen dem Aufhängerahmen (4) und der zum Flugzeugrumpf-Innenraum gerichteten Flugzeug-Struktur (5) und die Biegefestigkeit der Rahmendistanzträger (9) des Aufhängerahmen (4) sowie der Aufhängestangen (2) durch die Aufhängelast der Klimaanlage (3) und den Randbedingungen der Flugsicherheit definiert ist.

## Claims

1. Aircraft structure with air-conditioning system and air-conditioning-system suspension arrangement for a wide-body commercial aircraft, which is used for the horizontal suspension of an air-conditioning system (3) installed in the interior region of the aircraft fuselage and fastened within a high installation space (1) to the aircraft structure (5), having a plurality of fastening units integrated from different fastening means, a first fastening unit comprising an arrangement of a plurality of suspension rods (2) which are fastened vertically or approximately vertically at defined force-introduction and -transmission positions of different air-conditioning-system components positioned above the air-conditioning system (3),
**characterised in that** the rod ends of the suspension rods (2) which are not fastened to the air-conditioning-system components are fastened at defined force-introduction and -transmission positions of a suspension frame (4) which embodies a second fastening unit, and the suspension frame (4) is fastened at defined force-introduction and -transmission positions underneath the aircraft structure (5) located inside the aircraft fuselage.

2. Aircraft structure according to Claim 1, **characterised in that** the suspension frame (4) has a frame base framework (6), formed from interconnected transverse and longitudinal members (7, 8), and a plurality of frame difference members (9) which are arranged on the frame base framework and are fastened vertically or approximately vertically at the defined force-introduction and -transmission positions above the frame base framework (6), the member ends of the frame distance members (9) which are not fastened to the frame base framework (6) being fastened at the defined force-introduction and -transmission positions of the aircraft structure (5).

3. Aircraft structure according to Claim 2, **characterised in that** at least two member ends of the frame distance members (9) which are not fastened to the frame base framework (6) are fastened to the metal interior structure of the aircraft underneath the cabin ceiling or cargo-compartment ceiling.

4. Aircraft structure according to Claim 3, **characterised in that**, in the case of a frame base framework (6) designed as a simple frame, at least two or, in the case of a frame base framework (6) designed as a triangular frame, at least three or, in the case of a frame base framework (6) designed as a square or rectangular frame, at least four or, in the case of a frame base framework (6) designed as a polygonal frame or the combination of frame constructions with multiple suspension, at least four or more member ends of the frame distance members (9) which are not fastened to the frame base framework (6) are fastened to the metal interior structure of the aircraft underneath the cabin ceiling or cargo-compartment ceiling.

5. Aircraft structure according to Claims 1 and 2, **characterised in that** a plurality of mechanically connected transverse and longitudinal mountings (10, 11) are fastened underneath the frame base framework (6), to which mountings the rod ends of the suspension rods (2) which are not fastened to the air-conditioning-system components are fastened.

6. Aircraft structure according to Claims 1 to 5, **characterised in that** the frame base framework (6) is fastened to the rod ends of the suspension rods (2) which are not fastened to the air-conditioning-system components and, in addition, the vertically or approximately vertically arranged frame difference members (9) are fastened at the defined force-introduction and -transmission positions on the transverse and longitudinal mountings (10, 11), which are fastened, in a manner lying on top, to the frame base framework (6).

7. Aircraft structure according to Claim 1, **characterised in that** the suspension frame (4) is specially dimensioned and statically determined, the number of force-introduction and -transmission positions between the suspension frame (4) and the aircraft structure (5) directed towards the interior space of the aircraft fuselage, and the flexural strength of the frame distance members (9) of the suspension frame (4) and of the suspension rods (2) being defined by the suspension load of the air-conditioning system (3) and the flight safety boundary conditions.

## Revendications

1. Structure d'avion avec installation de conditionnement d'air et suspension d'installation de conditionnement d'air pour un avion gros porteur utilisée pour suspendre horizontalement une installation de conditionnement d'air (3) qui est montée à l'intérieur du fuselage de l'avion et est fixée à la structure d'avion (5) dans un espace (1) de grande hauteur, laquelle suspension présente plusieurs unités de fixation formées de moyens de fixation de type différent, une première unité de fixation étant formée d'un agencement de plusieurs tiges de suspension (2) qui sont fixées verticalement ou sensiblement debout verticalement à des points définis d'application et de transmission d'effort de différents composants de l'installation de conditionnement d'air placés au-dessus de l'installation de conditionnement d'air (3), **caractérisée par le fait que** les extrémités des tiges de suspension (2) qui ne sont pas fixées à des composants de l'installation de conditionnement d'air sont fixées à des points définis d'application et de transmission d'effort d'un cadre de suspension (4), qui constitue une deuxième unité de fixation, et que le cadre de suspension (4) est fixé à des points définis d'application et de transmission d'effort au-dessous de la structure d'avion (5) située à l'intérieur du fuselage d'avion.

2. Structure d'avion selon la revendication 1, **caractérisée par le fait que** le cadre de suspension (4) présente un cadre de base (6) formé de traverses et de longerons (7, 8) assemblés les uns avec les autres et plusieurs supports intercalaires (9) disposés sur celui-ci, qui sont fixés verticalement ou sensiblement verticalement aux points définis d'application et de transmission d'effort, au-dessus du cadre de base (6), les extrémités des supports intercalaires (9) qui ne sont pas fixées au cadre de base (6) étant fixées aux points définis d'application et de transmission d'effort de la structure d'avion.

3. Structure d'avion selon la revendication 2, **caractérisée par le fait qu'**au moins deux extrémités de support des supports intercalaires (9) qui ne sont pas fixées cadre de base (6) sont fixées à la structure métallique intérieure de l'avion, sous le plafond de cabine ou de soute à bagages.

4. Structure d'avion selon la revendication 3, **caractérisée par le fait que** dans le cas d'un cadre de base (6) conformé en cadre simple au moins deux, ou dans le cas d'un cadre de base (6) conformé en cadre triangulaire au moins trois, ou dans le cas d'un cadre de base (6) conformé en quadrilatère ou en rectangle au moins quatre, ou dans le cas d'un cadre de base (6) conformé en cadre polygonal ou en une combinaison de systèmes de cadres à suspension multiple quatre ou plus de quatre des extrémités de support des supports intercalaires (9) qui ne sont pas fixées au cadre de base (6) sont fixées à la structure métallique intérieure de l'avion, sous le plafond de cabine ou de soute à bagages.

5. Structure d'avion selon les revendications 1 et 2. **caractérisée par le fait qu'**au-dessous du cadre de base (6) sont fixées plusieurs attaches transversales et longitudinales (10, 11) liées mécaniquement, auxquelles sont fixées les extrémités des tiges de suspension (2) qui ne sont pas fixées aux composants de l'installation de conditionnement d'air.

6. Structure d'avion selon les revendications 1 à 5, **caractérisée par le fait que** le cadre de base (6) est fixé aux extrémités des tiges de suspension (2) qui ne sont pas fixées aux composants de l'installation de conditionnement d'air et aux attaches transversales et longitudinales (10, 11) qui sont fixées au cadre de base (6), et que les supports intercalaires (9) sont fixés verticalement ou sensiblement verticalement aux points définis d'application et de transmission d'effort.

7. Structure d'avion selon la revendication 1. **caractérisée par le fait que** le cadre de suspension (4) est dimensionné spécialement et est déterminé statiquement, le nombre des points d'application et de transmission d'effort entre le cadre de suspension (4) et la structure d'avion (5) tournée vers l'intérieur du fuselage et que la résistance à la flexion des supports intercalaires (9) du cadre de suspension (4) ainsi que des tiges de suspension (2) est définie par la charge suspendue de l'installation de conditionnement d'air (3) et les conditions aux limites de la sécurité de vol.
